# EUROPEAN PATENT APPLICATION

(11) **EP 2 333 409 A1**
(43) Date of publication of application: **15.06.2011**
(21) Application number: 09178097.3
(22) Date of filing: 04.12.2009
(51) Int. Cl.: F22B 1/00, F22B 1/18, F02C 6/18, F22G 1/16, F02C 1/00, F02C 1/05, F02C 1/06, F24J 2/10

(54) **Heat recovery steam generator, method for boosting a heat recovery steam generator and related process for generating power**

(71) Applicant: SON S.R.L., 20123 Milano (MI) (IT); Nooter/Eriksen s.r.l., 21010 Gardano al Campo (VA) (IT)
(72) Inventor: Perego, Mario, 20010 Santo Stefano Ticino (MI) (IT); Scapini, Piero, 20149 Milano (IT)
(74) Representative: Zardi, Marco

(57) **Abstract**

A solar receiver (9) is integrated with a heat recovery steam generator (1) to provide additional heat input to the same and increase the steam output. According to embodiments of the invention, a solar heater provides re-heating of a portion of exhaust gases of the HRSG, or a portion of the feedwater is evaporated totally or partially in a solar evaporator, obtaining a steam flow. A corresponding process generating power in a combined cycle and a method for boosting a conventional HRSG are disclosed.

## Description

### Field of the invention

The invention relates to heat-recovery steam generation in a combined power plant.

### Prior art

In a combined power plant, more than one thermodynamic cycle are used to produce power. The heat discharged from one thermodynamic cycle is used as the total or partial heat input for another (bottom) thermodynamic cycle. For example, in a gas-steam combined power plant, the hot exhaust gases of a gas turbine are used to generate steam in a heat recovery steam generator (HRSG), feeding a steam turbine. The HRSG may operate at one or more pressure levels for a better exploitation of the heat made available by the exhaust gases. A heat recovery steam generator is described for example in EP 1 684 011.

A combined power plant such as a gas-steam power plant can achieve a remarkable efficiency, up to 60%. However, it is still based on fossil fuels such as natural gas and/or coal. For example, the power delivered by a gas-steam power plant comes entirely from the natural gas feed of the gas turbine.

The need to reduce CO₂ emissions call for an increase of the use of renewable energy sources instead of fossil fuels. The solar energy looks among the most promising, due to the huge energy amount, capable to satisfy the growing energy demand.

The known solar thermal energy techniques include the following. Parabolic trough power plants comprise a curved trough arranged to reflect the solar radiation onto a collector pipe containing a suitable fluid. The fluid may be a synthetic thermal oil or a molten salt. The fluid is then used to provide heat input to a heat engine. In a so-called power tower plant, an array of moveable mirrors is used to focus the solar radiation upon a collector or receiver. The heat recovered from the sun can be used in a solar boiler to produce steam for a steam turbine.

There are some installations of such power plants in the world, which however show major drawbacks including the high investment costs and the need of a storage system in order to guarantee a stable output even during cloudy weather and night time. The use of molten salts as the heat exchange storage means has also shown a number of problems, including the risk of irreparable solidification of the molten salts when the heat input decreases.

Moreover, a solar boiler has the drawback of a high sensitivity to climate conditions. The heat transfer coefficient is strongly dependent on the radiant factor, which can have sudden variations timewise. This means that materials of the solar boiler are to be selected with a conservative and hence more expensive approach, in order to accommodate quick transients with an acceptable safety margin. This is a limitation in raising the nominal temperature and pressure of steam in a solar-powered steam generator, thus limiting the overall efficiency of the plant.

Another drawback is the need of a very large area for installation of the plant. In order to get the benefit of a certain scale factor for the steam turbine, condenser, etc. there is an incentive to large installation; it is however difficult to find suitable locations.

For the above reasons, a stand-alone solar power plant is hardly competitive with a fossil-fuelled power plant, despite the strong incentive to promote the use of renewable energy sources.

### Summary of the invention

The problem underlying the invention is to provide a system for power generation making an efficient use of solar energy, capable of meet stable power output without the need of a storage system, such as the molten salt storage system of known solar plants; simplify the solar boiler making it less sensitive to climate; compromise overall capital cost; have access to financial incentives such as green certificates, where available.

The basic idea underlying the invention is to provide an intimate integration between the HRSG of a combined cycle and a suitable solar receiver, so that a portion of the heat available to the HRSG comes from the sun. The combined cycle may be a gas-steam cycle where exhaust gases of a gas turbine are used to produce steam for feeding a steam turbine, but any alternative arrangement is possible.

According to the invention, a combined process for generating power comprising the steps of generating a first power output with a first heat engine; cooling hot exhaust gases of said first heat engine in a heat recovery steam generator, to produce a steam flow, and using said steam flow to generate a second power output, and is characterized in that a solar radiation is concentrated to at least one solar receiver, said solar receiver being arranged to provide an additional heat input to said heat recovery steam generator.

The invention also relates to a power plant adapted to carry out the above process and to a heat recovery steam generator adapted to carry out the above process. The invention also relates to a method for boosting a heat recovery steam generator.

The first heat engine is preferably a gas turbine or another internal combustion engine such as Otto, Diesel or other. The second power output is preferably obtained with a steam turbine.

The term solar receiver is used with reference to a device adapted to receive a concentrated solar radiation from a suitable source such as a mirror field. The solar receiver is the heat source of suitable heat exchange elements, such as tubes or plates. The solar receiver may comprise a solar air/gas heater, a solar evaporator and/or superheater.

According to a first embodiment of the invention, the solar receiver is arranged to provide an additional heat input to the hot gaseous stream which is the heat source of the heat recovery steam generator.

In a preferred way of carrying out this first embodiment, a solar heater is arranged to heat a fresh air stream or to reheat a portion of exhaust gases. Said portion of exhaust gases can be taken at the exhaust stack or any intermediate location of the heat recovery steam generator. The heated air or re-heated exhaust stream is then fed to any suitable location of the HRSG, preferably at the inlet duct of the HRSG.

For example, a portion of exhaust gases is taken from the exhaust stack by means of a recirculation fan, re-heated in said solar heater and returned to the inlet duct of the heat recovery steam generator, thus adding the reheated recirculated gas stream to the hot gases coming from the first heat engine. The HRSG can be modified to accommodate the additional recirculated gas flow, together with the exhaust gas flow coming from the first heat engine. In alternative embodiments, the solar heat recovery is made available when the heat engine operates at a partial load and hence exhaust flow is lower, to avoid a re-sizing of the various components of the combined power plant. For example, a gas turbine has a reduced output and reduced exhaust flow rate during summer operation, due to the higher ambient temperature; the solar heat recovery according to the invention, hence, can be advantageously used in summer operation to compensate for the lower output of the gas turbine.

According to a second embodiment of the invention, the solar receiver is arranged to heat directly one of the water or steam flows of the heat recovery steam generator. Depending on the temperature reached by the solar receiver and according to specific embodiments, the solar receiver may be arranged to preheat water, to partially or totally evaporate a water feed at any pressure level, or to provide superheating of steam.

For example, said solar receiver is the heat source of a solar evaporator, which operates in parallel with the evaporator of the HRSG, or any of the evaporators in a multiple-pressure arrangement of the HRSG. For example, a portion of the feed water of any of the evaporators of the HRSG, preferably the high pressure section, is directed to said solar evaporator. A water/steam mixture delivered by the solar evaporator can be fed to a separator and liquid fraction returned to the steam drum of the conventional evaporator in parallel with the solar evaporator.

In a preferred embodiment, the water feed from a an economizer of the HRSG is split into two portions; a first portion of said water feed is directed to an evaporator conventionally heated by the exhaust gases flowing through the steam generator, obtaining a first steam flow; a second portion of said hot water feed is totally or partially evaporated in the solar evaporator, thus obtaining an additional steam flow. Hence, a portion of the overall steam output of the generator is produced directly by solar heat.

The solar receiver may be integrated with the HRSG, for example installed on the main stack of the generator, or may be located on a dedicated tower. The mirror field preferably features a control of dual-axis orientation, according to a *per se* known art.

According to further aspects of the invention, a conventional heat recovery steam generator is modified by adding a solar receiver, for example including a solar gas heater or solar evaporator, as disclosed above.

The invention provides a true and intimate integration between a conventional combined power plant and a solar plant. Integration between the solar source and the conventional heat recovery is provided by using the heat from the solar receiver as an additional heat source of the heat recovery steam generator.

Additional power is produced in a clean manner, without releasing any CO₂ to the atmosphere. Exploitation of solar energy is possible in a cost-effective way, reducing the capital cost thanks to the possibility of revamping an existing combined plant. On the other hand, the integrated solar/combined plant according to the invention does not suffer the drawbacks of a purely solar installation, such as the need of energy storage media and fluctuations in power output.

Another advantage of the invention is that the peak capability of the plant can be increased. The additional solar contribution can be used to guarantee the peak load, because the peak is usually requested in daytime, when the solar energy is available. In any case the additional power output from the solar energy can be made available as a peak load or a base load, whatever appropriate.

A power plant according to the invention is less sensitive to climate conditions than a conventional solar installation, because the solar contribution is only a part of the heat input. For example, in one embodiment of the invention a solar heater evaporates a water flow from the economizer of a HRSG, the pressure and temperature of the steam being raised by the hot exhaust gases in the HRSG superheater and reheater. This means that the maximum temperature and pressure of the steam are substantially independent on the radiant factor. Hence, the operation is stable and the plant is suitable to satisfy the actual energy demand.

The solar part can be added to a conventional HRSG to increase the steam output and/or reduce the fuel consumption. The capacity of a conventional HRSG, as an indication, can be increased by 5-20%. If the solar contribution is used to reduce fuel consumption or to cover the peak loads, the main items such as turbines, condenser, etc... need not to be modified and the capital cost is not increased. Another advantage of boosting an existing plant is that there is no need to find a new location for the power plant.

The advantages will be more evident with the following detailed description of preferred embodiments, reported as non-limitative examples.

### Description of the figures

Fig. 1 is a scheme of a heat recovery steam generator according to one embodiment of the invention.
Fig. 2 is a scheme of a heat recovery steam generator according to a further embodiment of the invention.

### Detailed description of preferred embodiments

### First Embodiment

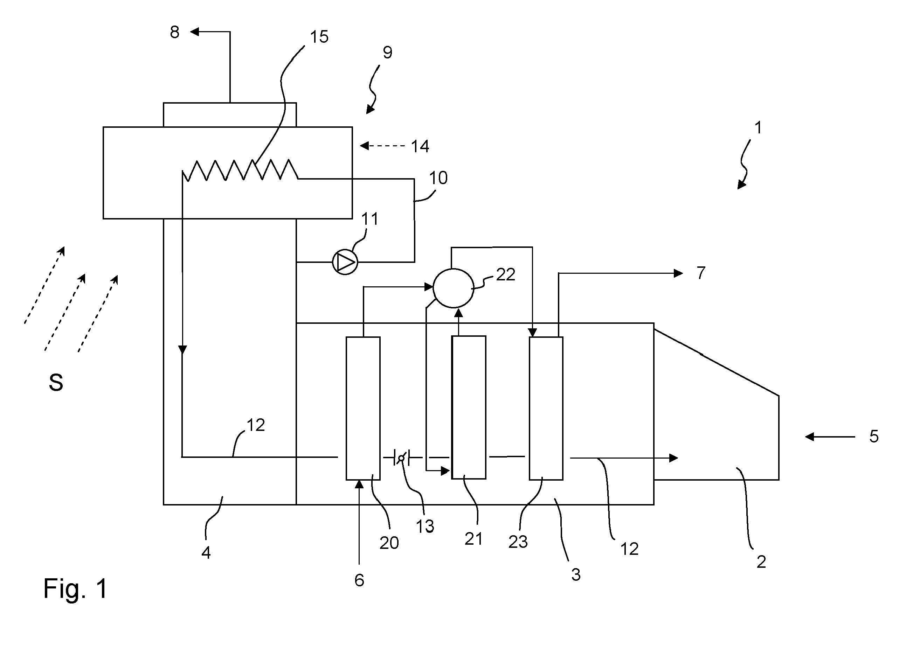

Solar-generated heat is used to increase the heat content of the hot gaseous flow in a heat recovery steam generator (Fig. 1).

A heat recovery steam generator (HRSG) 1 comprises basically an inlet duct 2, a body 3 and an exhaust stack 4. The generator 1 receives a hot gaseous effluent 5 from a heat engine, such as the exhaust gases of a gas turbine. In the body part 3, the heat of gas effluent 5 is used to evaporate a water feed 6 producing a steam output 7, which is directed preferably to a steam turbine. The cooled gas 8 are discharged from the exhaust stack 4.

The body part 3 may comprise tube bundles operating at one or more pressure level(s). Typically the generator 1 comprises at least an economizer, an evaporator and a superheater for each pressure level. A common arrangement for large installation is three pressure levels plus a reheater. These details are known art in the field of heat recovery steam generators, and need not be further discussed. Fig. 1 shows an example of a heat recovery steam generator 1 comprising a single pressure level with an economizer 20, an evaporator 21 connected to a steam drum 22, and a superheater 23. The invention is equally applicable to multiple pressure level HRSGs.

A solar receiver 9 is integrated with the generator 1 and mounted onto the exhaust stack 4, receiving concentrated solar radiation S from a suitable mirror field (not shown). The solar receiver 9 is the heat source of a solar gas heater 15. The solar heater 15 comprises suitable heat exchange means, such as tube bundles or plates.

A portion of the exhaust gas stream flowing into the exhaust duct 4 is deviated to a duct 10 and a fan 11, and directed to the solar heater 15. Reheated gaseous stream 12 is recirculated back to the inlet duct 2, via a dedicated recycle duct. The flow of recirculated gas is controlled by suitable means including e.g. a damper 13.

Hence, the overall heat input of the generator 1 is increased, comprising the heat content of the stream 5 and the solar contribution by means of the heat made available by the re-heated gas stream 12. This means that the steam output 7 and hence the power output of the steam turbine can be increased. It has to be noted that the whole of the heat captured by the solar receiver deduced only the heat losses in the ductwork, is transferred to the heat coil, due to the recirculation arrangement.

In an alternative embodiment, the solar heater 9 is mounted on a dedicated tower rather than on the exhaust stack 4.

In a further variant of this embodiment, the solar heater 15 is an air heater. A fresh air flow 14 is heated and fed to a suitable location of the generator 1, such as the inlet duct 2.

The hot air or reheated exhaust gas, according to further variants, can be returned to a different location of the HRSG, between any of the tube bundles of the HRSG. The most appropriate location depends on the arrangement of the HRSG and/or the temperature reached in the solar heater 15.

### Second embodiment

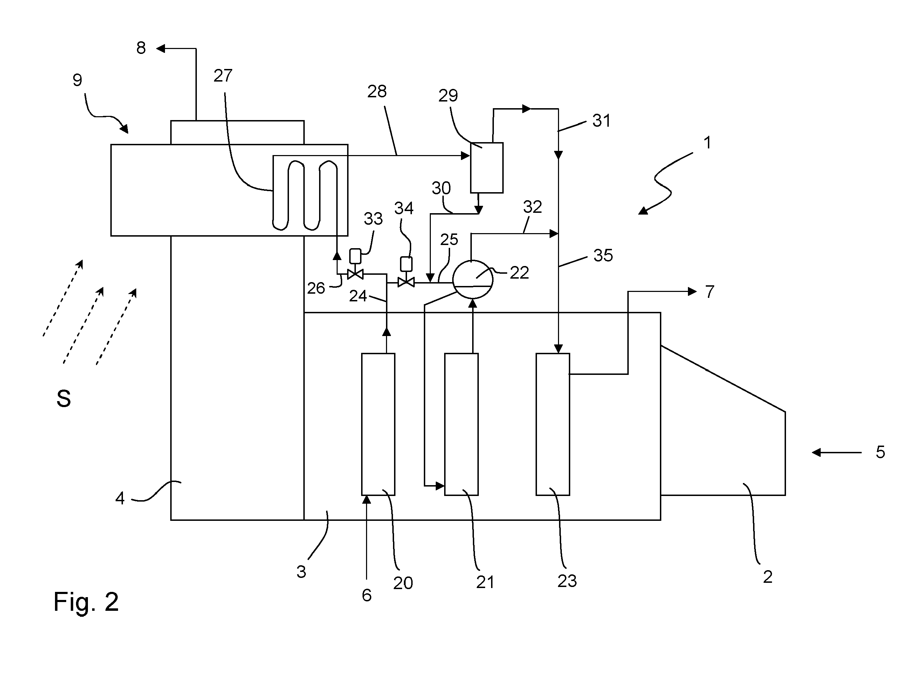

Fig. 2 shows an embodiment of the invention where the solar heat is used directly to produce a part of the steam output 7 of the HRSG.

The water feed 6 is heated in the economizer 20, usually close to saturation. The water flow 24 from said economizer 20 is split into a first water feed 25 directed to the steam drum 22 of the evaporator 21, and a second water feed 26 which is directed to a solar boiler 27. A solar receiver 9 is the heat source of said solar boiler 20.

The first water feed 25 is circulated in the tubes of the evaporator 21, and is evaporated in a conventionally manner by the heat of exhaust gases 5 flowing through the casing 3. Saturated steam 32 leaves the steam drum 22.

The second water feed 26 is totally or partially evaporated in the solar boiler 27. The output flow 28 of the solar boiler 27 is sent to a separator 29 and separated into water fraction 30 and steam fraction 31. The water fraction 30 is returned to the steam drum 22. Saturated steam 32 leaving the drum 22 is mixed with the steam fraction 31 from the separator 29, and the resulting steam flow 35 is further heated in the superheater 23, where applicable. A separation system as described in US 6,557,500 can be adopted in combination with the present invention.

The ratio between the feed water portions 25 and 26, respectively to the steam drum 22 and to the solar boiler 27, is controlled by valves 33 and 34.

In a preferred embodiment, a first valve 33 regulates the water feed 26 directed to the solar evaporator 27, said first valve 33 being controlled by either the temperature of stream 28 at the outlet of the solar boiler 27, or by the steam content of said stream 28, for example the title (liquid Vs. steam). A second valve 34 regulates the water feed 25 to the steam drum 22 of the conventional evaporator 21, said second valve being controlled by the liquid level inside the steam drum 22.

The invention is suitable for boosting a conventional heat recovery steam generator, for example in a combined cycle based on a gas turbine plus a steam turbine. Boosting a heat recovery steam generator includes the steps of: installing the solar receiver 9 on or around the main stack 4; installing a mirror field arranged to concentrate solar radiation S onto said solar receiver 9; arranging the solar receiver 9 to provide an additional heat input to the heat recovery steam generator. According to embodiments of the invention, the additional input is obtained by means of at least one of the following: deviating a portion 10 of exhaust gases to a solar heater, and returning reheated gases to a suitable point of the generator; heating a fresh air stream and feeding hot air to the generator; transfer heat directly to a water flow or a steam flow, possibly with total or partial evaporation of a water feed. A conventional HRSG can be boosted for example to the configuration of Fig. 1 or Fig. 2.

## Claims

1. A combined process for generating power comprising the steps of:
generating a first power output with a first heat engine; cooling hot exhaust gases (5) of said first heat engine in a heat recovery steam generator (1), to produce a steam flow (7), and using said steam flow to generate a second power output, **characterized in that** a solar radiation (S) is concentrated to at least one solar receiver (9), said solar receiver being arranged to provide an additional heat input to said heat recovery steam generator.

2. A process according to claim 1, said solar receiver (9) being arranged to provide additional heat input to a gaseous stream (5) forming the heat source of said heat recovery steam generator (1).

3. A process according to claim 2, **characterized in that**:
- at least a portion (10) of said exhaust gases are re-heated in a solar heater (15), or a fresh air stream (14) is heated in a solar heater (15), said solar receiver (9) being the heat source of said solar heater (15), thus obtaining a hot stream (12) of hot air or re-heated exhaust gases, and
- said hot stream (12) is returned to an inlet duct (2) of the heat recovery steam generator, or to an intermediate section of said generator.

4. A process according to claim 3, where a portion (10) of exhaust gases is taken from an exhaust stack (4) of the heat recovery steam generator (1); said portion (10) of exhaust gases is re-heated in said solar heater (15), obtaining reheated gas stream (12), the reheated gas stream being returned to the inlet duct (2) of said heat recovery steam generator (1).

5. A process according to claim 1, said solar receiver (9) being arranged to transfer heat directly to a water flow or a steam flow of the heat recovery steam generator (1).

6. A process according to claim 5, said solar receiver (9) being arranged to provide partial or total evaporation of a water feed (26), thus producing directly an additional steam output (31) of the heat recovery steam generator.

7. A process according to claim 6, the water feed (26) directed to the solar receiver (9) being a portion of the water feed (24) of an evaporator (21) of the heat recovery steam generator (1), the solar receiver (9) operating in parallel with said evaporator (21).

8. A heat recovery steam generator comprising an inlet duct for receiving hot exhaust gases from a heat engine; a casing (3) comprising on or more tube bundle(s) adapted to produce steam at one or multiple pressure level(s) by heat exchange with said exhaust gases; an exhaust stack (4) for discharging cooled exhaust gases, **characterized by** comprising a solar receiver (9) arranged to provide an additional heat input by at least one of the following:
a) re-heating at least a portion (10) of exhaust gases or heating a fresh air stream (14), obtaining a hot gaseous stream (12), and feeding said hot gaseous stream through a dedicated duct (12) at a suitable location of the heat recovery steam generator, to provide additional heat source to at least one of said tube bundle(s), or
b) providing directly a heat input to a water flow (26) or a steam flow of said heat recovery steam generator.

9. A heat recovery steam generator according to option b) of claim 8, comprising a solar evaporator (27) disposed to operate in parallel with an evaporator (21) of said generator.

10. A heat recovery steam generator according to claim 8 or 9, the solar receiver (9) being installed on the exhaust stack (4) of said generator, or on a dedicated tower.

11. A combined-cycle power plant adapted to carry out the process of any of claims 1 to 7, comprising a first heat engine, a heat recovery steam generator (1) arranged to cool the exhaust gas (5) of said first heat engine, to produce hot steam (7) and power a steam turbine, the plant being **characterized by** comprising:
- a solar receiver (9);
- a mirror field disposed to concentrated solar radiation (S) onto said solar receiver (9);
- the solar receiver (9) being arranged to provide an additional heat input to said heat recovery steam generator.

12. A method for boosting the heat recovery steam generator (1) of a combined-cycle power plant, comprising the following steps:
- installing a solar receiver (9);
- installing a mirror field arranged to concentrate solar radiation (S) onto said solar receiver (9);
- arranging the solar receiver (9) to provide an additional heat input to said heat recovery steam generator (1) by means of at least one of the following: re-heating a portion (10) of exhaust gases of the heat recovery steam generator and returning reheated gases to the generator; heating a fresh air stream (14) and feeding hot air to the generator; transfer heat directly to a water flow or a steam flow; providing partial or total evaporation of a water feed (26).
